# EUROPEAN PATENT SPECIFICATION

(11) **EP 1 338 969 B1**
(45) Date of publication and mention of the grant of the patent: **18.07.2007**
(21) Application number: 03003997.8
(22) Date of filing: 24.02.2003
(51) Int. Cl.: G06F 11/20

(54) **A circuit arrangement for an electronic control module for converting between communication protocols**
Schaltungsanordnung für einem elektronischen Steuermodul zur Umsetzung von Kommunikationsprotokolle
Ensemble circuit pour un module de commande électronique pour la conversion de protocoles de communication

(30) Priority: 25.02.2002 IT TO20020160
(43) Date of publication of application: 27.08.2003
(73) Proprietor: MAGNETI MARELLI SISTEMI ELETTRONICI S.p.A., 20011 Corbetta (Milano) (IT)
(72) Inventor: Borin, Andrea, 29015 Castel San Giovanni (Piacenza) (IT); Caprioli, Antonio, 10136 Torino (IT); Cremonesi, Riccardo, 10147 Torino (IT)
(74) Representative: Deambrogi, Edgardo

(56) References cited:
- EP-A- 0 872 973
- EP-A- 0 889 410
- WO-A-95/10146
- US-A- 5 021 938
- US-A- 5 570 345
- US-A- 5 638 507
- US-A- 6 154 850
- US-B1- 6 169 726

## Description

The present invention relates to an electronic module for converting between communication protocols, and relates in particular to an electronic instrument panel module intended for installation on motor vehicles.

Electronic control units installed on board motor vehicles are connected together by means of communication networks which utilise specific communication protocols. The configuration which has become standard in the art for connecting between distributed control units, for applications of multiplex type between on-board electronic devices, and for on-board systems for mobile communications, is indicated by the acronym CAN (Controller Area Network).

The form of the signal frame transmitted on a CAN network is well known to those skilled in the art and will not be described here in detail. Data transmission rates typically lie between 20 kbit/s and 1Mbit/s.

The electronic module used for converting between CAN communication protocols makes it possible to exchange data between the units and on-board devices and is known as a "gateway", a term which will be used hereinafter in this description.

Traditionally, in an electronic on-board module, a gateway is formed by using a single microcontroller, and in the case of failure the communication between the on-board units in interrupted. The known alternative to provide a secure gateway function, which allows the operation of the system to be maintained, is that of inserting into the network architecture two separate electronic modules, each able to perform the gateway function independently of the operating condition of the other.

This solution is particularly wasteful since it requires the gateway function on the vehicle to be duplicated by providing two separate control modules, and increases the complexity of the system.

Another known protection switching system is disclosed in prior art document WO 95/10146, published on 13.04.95.

For the purpose of providing conversion between communication protocols of a plurality of CAN networks on a single module with secure functionality in such a way as to guarantee the function of information transfer even in the event of breakdowns, the subject of the invention is a twin processor circuit arrangement according to Claim 1.

Particular embodiments of the invention are defined in the dependent Claims.

In summary, the present invention is based on the principle of providing a single electronic module with a pair of interconnected processors, one of which provides the management of the conversion between communication protocols, and the other of which provides management for the passenger compartment or motor vehicle body functions of the vehicle for which the unit is intended, as well as supervision of the correct operation of the first, and is capable of assuming its functions in the case of failure.

Advantageously, the arrangement according to the invention is more economical than known arrangements which provide two separate electronic modules, and makes it possible to recover functionality in the case of breakdowns by maintaining control of the system on a single on-board electronic module.

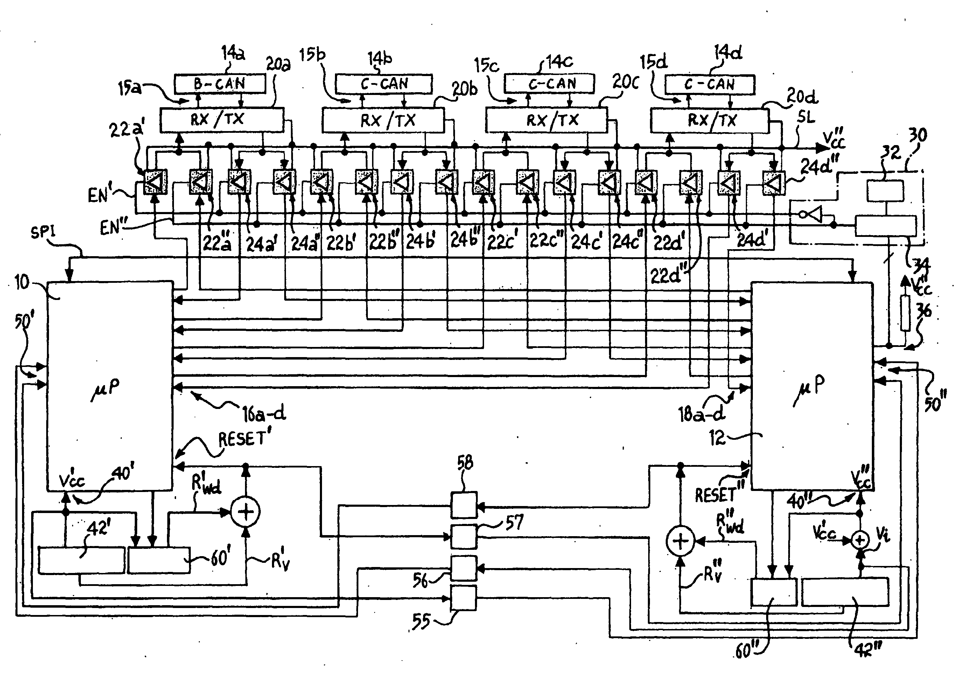

Further characteristics and advantages of the invention will be explained in more detail in the following detailed description of an embodiment, given by way of non-limitative example, with reference to the attached drawing, which shows a block diagram of the circuit arrangement of the invention.

The reference numerals 10 and 12 indicate two microprocessors of an instrument panel electronic module, respectively a first (main) processor with gateway functions for conversion between communication protocols and the routing of information between CAN networks, and a second processor intended for management of predetermined passenger compartment or motor vehicle body functions (for example central locking, immobiliser, alarm, control of access to the vehicle).

A high speed bi-directional serial line SPI (or, alternatively, a parallel line) puts the two processors in communication according to a known communication protocol.

The second processor 12 is arranged to supervise the correct functioning of the first processor 10 via the line SPI and to perform the gateway functions in its place upon the occurrence of breakdowns, and for this reason will be identified hereinafter as the auxiliary processor.

In the drawing only the circuit arrangement and the connections between both processors relating to the performance for the gateway function are shown in that only these form the subject of the invention.

The reference numerals 14a, 14b, 14c, 14d indicate CAN networks outside the instrument panel module, which are connected to it through corresponding bi-directional serial lines 15a, 15b, 15c, 15d the use of which is managed by the main processor 10 or the auxiliary processor 12. These networks can be low speed B_CAN networks (100 kbit/s) and high speed C_CAN networks (1 Mbit/s).

Naturally, although four CAN networks have been shown, the description is intended to be valid for systems which have any number of networks equal to two or more.

Each processor is coupled to the external CAN networks by a respective plurality of input/output ports 16a-16d and 18a-18d via interface circuits (transceivers) 20a, 20b, 20c, 20d.

Each processor, in its gateway function, is arranged to operate in a manner known in the art, processing, filtering or simply routing information in the form of frames of signals from a first to a second CAN network.

For the purpose of avoiding conflict situations in the connection between the processors 10, 12 and the interface circuits of the CAN networks there are interposed selection means comprising a plurality of buffer devices with tri-state logic, respectively transmitter devices 22 and receiver devices 24, and more specifically a pair of devices for each input/output port of each processor.

With reference to the coupling of the processors to the CAN network 14a through the associated interface circuit 20a, in a configuration for transmission of output signals from the processors towards the network, the serial line 15a is coupled to the main processor 10 by means of the tri-state 22a', and to the auxiliary processor 12 by means of the tri-state 22a" respectively. In a configuration for reception of signals from the network to the processor input, the line 15a is coupled respectively to the main processor 10 by means of the tri-state 24a' and to the auxiliary processor 12 by means of the tri-state 24a".

Corresponding reference numerals indicate the tri-state devices for coupling processors 10, 12 to the networks 20b, 20c, 20d.

Each tri-state device 22, 24 has a respective enabling input as well as the signal input and output.

The enabling inputs of the tri-state devices coupled to the main processor 10 are connected to an associated selection line EN', whilst the enabling inputs of the tri-state devices coupled to the auxiliary processor 12 are connected to an associated selection line EN".

A selection circuit 30 for selective activation or disactivation of the tri-state devices 22, 24 comprises a memory register 32 operable to memorise an intervention code word (for example an 8 bit word) coupled to a first input of a comparator circuit 34, the second input of which is coupled to a selection port 36 of the auxiliary processor 12.

The output of the comparator circuit 34 is directly connected to the selection line EN" and is connected to the selection line EN' via an inverter:

A supply line SL connects all the tri-state devices 22, 24 to a voltage supply source V_{cc}" of the auxiliary processor 12.

Each processor 10, 12 further has a supply input 40', 40" to receive supply voltage from an associate voltage regulator 42', 42", a reset input RESET', RESET" and preferably, a pair of control inputs 50', 50" for monitoring the supply voltage and the reset signal of the other processor.

The voltage regulator 42' provides a supply voltage V_{cc}' to the main processor 10 and to a control input of the processor 12 via a buffer 55.

The voltage regulator 42" generates an intermediate voltage Vᵢ and provides a supply voltage V_{cc}" to the auxiliary processor 12 as a sum of the intermediate voltage Vᵢ and the voltage V_{cc}' generated by the voltage regulator 42' of the main processor. The intermediate voltage Vᵢ is also provided to a control input of the processor 10 via a buffer 56.

Each processor further has an associated surveillance timer (currently identified with the name "watchdog"), respectively 60', 60" supplied by the supply voltage provided to the corresponding processor and operable to generate its reset signal R_{wd}' and R_{wd}" respectively.

The reset signal of each processor is derived from the logic sum of the reset signals Rᵥ and R_{wd} emitted by the respective voltage regulators (in the case of voltages outside tolerance) and by the watchdog timer and is provided to the respective reset input RESET', RESET", as well as to a control input of the other processor through the buffers 57, 58.

In operation in normal conditions the auxiliary processor 12 controls the selection of the tri-state devices 22, 24 emitting at its selection port a word different from the code word memorised in the register 32, in such a way as to send an enabling signal (a high logic signal) on the line EN' for the tri-state devices 22a'-22d' and 24a'-24d', simultaneously disabling the tri-state devices 22a"-22d" and 24a"-24d" coupled to the line EN" (on which a low logic signal is established).

In this operating condition the main processor 10 maintains control of the gateway function between the CAN networks 14a-14d, and the auxiliary processor 12 only performs the supervision function through the information exchanged on the line SPI and the data on the supply voltage and the reset state at the control inputs 50".

The count of the watchdog circuits 60' and 60" is refreshed by an associated reset signal periodically emitted by the associated processor in the case of correct operation.

Upon the occurrence of a breakdown or operating anomaly in which the main processor 10 no longer performs its functions, the auxiliary processor 12 detects this operative condition through the line SPI and assumes control of communication between the CAN networks, thus excluding the main processor. This takes place by presenting to its selection port 36 the intervention code word corresponding to that stored in the register 32, thus enabling the tri-state devices 22a"-22d" and 24a"-24d" through the selection line EN".

In this way reliability of the control module according to the invention is guaranteed since an interruption in the gateway function between the CAN networks is avoided by the intervention of the processor normally dedicated to the management of the passenger compartment and motor body functions.

Advantageously, in the redundant circuit arrangement forming the subject of the invention, the main and auxiliary processors are autonomous in the performance of their functions.

In particular, the main processor 10 cannot in any way actively condition the operation of the auxiliary processor 12, whilst this latter can condition the operation of the main processor 10 when it does not function correctly. On the other hand, the processor 10 cannot be conditioned by the auxiliary processor 12 if this latter is suffering a breakdown since this latter is not able to emit the intervention code word to the selection port 36 to match that memorised in the register 32, but will emit an accidental word or a predetermined error word corresponding for example to a serious of "1" or "0" which the system will not have made available as the intervention code word to be stored in the register 32.

It is possible to program the auxiliary processor to assume only partially the functions of the main processor and therefore to manage only the communication of messages considered most important ("limp-home" functionality).

A man skilled in the art will easily put the present invention into practice.

## Claims

1. A circuit arrangement for an electronic control module operable to effect conversion between communication protocols of a plurality of networks (14a-14d) connectable to it, comprising:
- a main processing unit (10) and an auxiliary processing unit (12) operable to effect conversion between communication protocols and exchange signals between networks (14a-14d), each having a plurality of input/output ports (16a-16d; 18a-18d) intended to be coupled to the said plurality of networks (14a-14d) via corresponding communication lines (15a-15d) for the transmission of digital signals; and
- a respective plurality of selector devices (22a'-22d',24a'-24d';22a"-22d",24a"-24d") coupled to the input/output ports (16a-16d;18a-18d) of each processing unit (10, 12) and interposed between the said ports (16a-16d; 18a-18d) and respective communication lines (15a-15d) to the corresponding network (14a-14d), the said devices (22a'-22d', 24a'-24d'; 22a"-22d", 24a"-24d") being able selectively to enable the transmission of signals on the said lines with a processing unit,
in which the said processing units (10, 12) are connected together by means of a communication control line (SPI) able to transmit to the auxiliary processing unit (12) state signals indicative of the operating condition of the main processing unit (10),
and in that
each selector device (22a'-22d', 24a'-24d'; 22a"-22d", 24a"-24d") has an enabling input controlled by the auxiliary processing unit (12) in dependence on the said state signals of the main unit (10) in such a way that, in a normal operating condition, the said devices co-operate to establish a coupling between the main unit (10) and the said networks (14a-14d), the auxiliary unit (12) being de-coupled, and in a failure condition of the said main unit (10) the said devices co-operate to establish a coupling between the auxiliary unit (12) and the said networks (14a-14d), the main unit (10) being de-coupled, such that the auxiliary unit (12) assumes the management of the conversion between communication protocols and the exchange of information between the networks.

2. A circuit arrangement according to Claim 1, **characterised in that** the selector devices (22a'-22d', 24a'-24d'; 22a"-22d", 24a"-24d") have enabling inputs coupled to a selection circuit (30) controlled by the auxiliary processing unit (12).

3. A circuit arrangement according to Claim 2, **characterised in that** the said communication lines (15a-15d) are bi-directional serial communication lines and the said plurality of selector devices comprise a plurality of pairs of devices (22a', 24a'; 22b', 24b'; 22c', 24c'; 22d', 24d'; 22a", 24a" ; 22b", 24b" ; 22c", 24c" ; 22d", 24d") coupled to each input/output port (16a-16d, 18a-18d) of each processing unit (10, 12) respectively for the transmission and reception of signals.

4. A circuit arrangement according to Claim 2 or Claim 3, **characterised in that** the enabling inputs of the selector devices (22a'-22d', 24a'-24d') coupled to the main processing unit (10) are connected to a first selection line (EN') and the enabling inputs of the selector devices (22a"-22d", 24a"-24d") coupled to the auxiliary processing unit (12) are connected to a second selection line (EN").

5. A circuit arrangement according to any of Claims 2 to 4, **characterised in that** the selection circuit (30) comprises a memory register (32) operable to store a code word, which is coupled to a first input of a comparator circuit (34), the second input of the said comparator circuit (34) being coupled to a selection command output (36) of the auxiliary processing unit (12).

6. A circuit arrangement according to Claim 5, **characterised in that** the comparator circuit (34) has a logic output connected directly to the second selection line (EN"), and connected inverted to the first selection line (EN').

7. A circuit arrangement according to Claim 5 or Claim 6, **characterised in that** the auxiliary processing unit (12) is arranged to emit to its selection command output (36) an intervention code word corresponding to the word stored in the memory register (32) when it detects a failure condition of the main unit (10) through the communication control line (SPI).

8. A circuit arrangement according to any preceding claim, **characterised in that** the said selector devices (22a'-22d', 24a'-24d'; 22a"-22d", 24a"-24d") are tri-state logic devices.

9. A circuit arrangement according to any preceding claim, **characterised in that** the processing units (10, 12) are connected together by means of high speed bi-directional serial communication control line (SPI).

10. A circuit arrangement according to any of Claims 1 to 8, **characterised in that** the processing units (10, 12) are connected together by means of a high speed bi-directional parallel communication control line.

11. A circuit arrangement according to any preceding claims, **characterised in that** each processing unit (10, 12) has a further supply input (40', 40") able to receive a supply voltage (V_{cc}', V_{cc}") from respective voltage regulator means (42', 42").

12. A circuit arrangement according to any preceding claim, **characterised in that** each processing unit (10, 12) further has a respective reset input (RESET', RESET").

13. A circuit arrangement according to Claims 11 and 12, **characterised in that** each processing unit (10, 12) further has a pair of control inputs (50', 50") able to receive signals indicative of the supply voltage (V_{cc}', V_{cc}") and the reset signal of the other unit.

14. A circuit arrangement according to Claim 11, **characterised in that** the supply voltage (V_{cc}") of the auxiliary processing unit (12) is obtained as the sum of an intermediate voltage (Vᵢ) generated by voltage regulator means (42") associated with the auxiliary processing unit (12) and the supply voltage (V_{cc}') of the main processing unit (10).

15. A circuit arrangement according to Claim 14, **characterised in that** each processor unit (10, 12) has a surveillance timer (60', 60") associated therewith, supplied with the supply voltage of the said unit and operable to generate its reset signal (R_{wd}' and R_{wd}").

16. A circuit arrangement according to Claims 12 and 15, **characterised in that** each processing unit (10, 12) is able to receive a reset signal derived from the logic sum of the reset signals emitted by the respective voltage regulator means (42', 42") and respective surveillance timer (60', 60").

17. A circuit arrangement according to any preceding claim, **characterised in that** the auxiliary processing unit (12) is arranged to assume only partially the functions of the main processing unit (10), whereby it manages only the exchange of high priority messages.

## Patentansprüche

1. Schaltungsanordnung für ein elektronisches Steuermodul, das dazu betriebsfähig ist, eine Umsetzung zwischen Kommunikationsprotokollen einer Mehrzahl von Netzwerken (14a-14d), die an ihm anschließbar sind, zu bewirken, wobei es Folgendes umfasst:
- eine Hauptverarbeitungseinheit (10) und eine Hilfsverarbeitungseinheit (12), die dazu betriebsfähig sind, eine Umsetzung zwischen Kommunikationsprotokollen zu bewirken und Signale zwischen Netzwerken (14a-14d) auszutauschen, wobei jede eine Mehrzahl von Ein-Ausgabeports (16a-16d; 18a-18d) aufweist, die dazu bestimmt sind, über entsprechende Kommunikationsleitungen (15a-15d) zum Übertragen digitaler Signale mit der Mehrzahl von Netzwerken (14a-14d) gekoppelt zu werden; und
- eine entsprechende Mehrzahl von Auswahlvorrichtungen (22a'-22d', 24a'-24d'; 22a"-22d", 24a"-24d"), die mit den Ein-Ausgabeports (16a-16d; 18a-18d) jeder Verarbeitungseinheit (10, 12) gekoppelt und zwischen den Ports (16a-16d; 18a-18d) und den jeweiligen Kommunikationsleitungen (15a-15d) zu dem entsprechenden Netzwerk (14a-14d) eingefügt sind, wobei die Vorrichtungen (22a'-22d', 24a'-24d'; 22a"-22d", 24a"-24d") die Übertragung von Signalen auf den Leitungen mit einer Verarbeitungseinheit selektiv freigeben können,
wobei die Verarbeitungseinheiten (10, 12) mittels einer Kommunikationssteuerleitung (SPI), die den Betriebszustand der Hauptverarbeitungseinheit (10) anzeigende Zustandssignale zur Hilfsverarbeitungseinheit (12) übertragen kann, miteinander verbunden sind,
und dass
jede Auswahlvorrichtung (22a'-22d', 24a'-24d'; 22a"-22d", 24a"-24d") einen Freigabe-Eingang hat, der von der Hilfsverarbeitungseinheit (12) abhängig von den Zustandssignalen der Haupteinheit (10) solcherart gesteuert wird, dass die Vorrichtungen in einem normalen Betriebszustand zusammenwirken, um eine Kopplung zwischen der Haupteinheit (10) und den Netzwerken (14a-14d) herzustellen, wobei die Hilfseinheit (12) entkoppelt wird, und die Vorrichtungen in einem Fehlerzustand der Haupteinheit (10) zusammenwirken, um eine Kopplung zwischen der Hilfseinheit (12) und den Netzwerken (14a-14d) herzustellen, wobei die Haupteinheit (10) entkoppelt wird, so dass die Hilfseinheit (12) das Management der Umsetzung zwischen Kommunikationsprotokollen und den Informationsaustausch zwischen den Netzwerken übernimmt.

2. Schaltungsanordnung gemäß Anspruch 1, **dadurch gekennzeichnet, dass** die Auswahlvorrichtungen (22a'-22d', 24a'-24d'; 22a"-22d", 24a"-24d") Freigabe-Eingänge haben, die mit einer durch die Hilfsverarbeitungseinheit (12) gesteuerten Auswahlschaltung (30) gekoppelt sind.

3. Schaltungsanordnung gemäß Anspruch 2, **dadurch gekennzeichnet, dass** die Kommunikationsleitungen (15a-15d) bidirektionale serielle Kommunikationsleitungen sind und die Mehrzahl von Auswahlvorrichtungen eine Mehrzahl von Paaren von Bausteinen (22a', 24a'; 22b', 24b'; 22c', 24c'; 22d', 24d'; 22a", 24a"; 22b", 24b"; 22c", 24c"; 22d", 24d") umfasst, die mit jedem Ein-Ausgabeport (16a-16d, 18a-18d) jeder Verarbeitungseinheit (10, 12) zum Übertragen bzw. Empfangen von Signalen gekoppelt sind.

4. Schaltungsanordnung gemäß Anspruch 2 oder Anspruch 3, **dadurch gekennzeichnet, dass** die Freigabe-Eingänge der mit der Hauptverarbeitungseinheit (10) gekoppelten Auswahlvorrichtungen (22a'-22d', 24a'-24d') an einer ersten Auswahlleitung (EN') angeschlossen sind und die Freigabe-Eingänge der mit der Hilfsverarbeitungseinheit (12) gekoppelten Auswahlvorrichtungen (22a"-22d", 24a"-24d") an einer zweiten Auswahlleitung (EN") angeschlossen sind.

5. Schaltungsanordnung gemäß einem der Ansprüche 2 bis 4, **dadurch gekennzeichnet, dass** die Auswahlschaltung (30) ein Speicherregister (32) umfasst, das dazu betriebsfähig ist, ein Codewort zu speichern, und mit einem ersten Eingang einer Komparatorschaltung (34) gekoppelt ist, wobei der zweite Eingang der Komparatorschaltung (34) mit einem Wahlbefehlsausgang (36) der Hilfsverarbeitungseinheit (12) gekoppelt ist.

6. Schaltungsanordnung gemäß Anspruch 5, **dadurch gekennzeichnet, dass** die Komparatorschaltung (34) einen Logikausgang hat, der an der zweiten Auswahlleitung (EN") direkt und an der ersten Auswahlleitung (EN') invertiert angeschlossen ist.

7. Schaltungsanordnung gemäß Anspruch 5 oder Anspruch 6, **dadurch gekennzeichnet, dass** die Hilfsverarbeitungseinheit (12) dazu eingerichtet ist, ein Eingriffs-Codewort, das dem im Speicherregister (32) gespeicherten Wort entspricht, an ihren Wahlbefehlsausgang (36) zu senden, wenn sie durch die Kommunikationssteuerleitung (SPI) einen Fehlerzustand der Haupteinheit (10) erfasst.

8. Schaltungsanordnung gemäß irgendeinem vorhergehenden Anspruch, **dadurch gekennzeichnet, dass** die Auswahlvorrichtungen (22a'-22d', 24a'-24d'; 22a"-22d", 24a"-24d") Tri-State-Logik-Bausteine sind.

9. Schaltungsanordnung gemäß irgendeinem vorhergehenden Anspruch, **dadurch gekennzeichnet, dass** die Verarbeitungseinheiten (10, 12) mittels einer bidirektionalen seriellen Hochgeschwindigkeits-Kommunikationssteuerleitung (SPI) miteinander verbunden sind.

10. Schaltungsanordnung gemäß einem der Ansprüche 1 bis 8, **dadurch gekennzeichnet, dass** die Verarbeitungseinheiten (10, 12) mittels einer bidirektionalen parallelen Hochgeschwindigkeits-Kommunikationssteuerleitung miteinander verbunden sind.

11. Schaltungsanordnung gemäß irgendeinem vorhergehenden Anspruch, **dadurch gekennzeichnet, dass** jede Verarbeitungseinheit (10, 12) einen weiteren Versorgungseingang (40', 40") aufweist, der von entsprechenden Spannungsreglermitteln (42', 42") eine Anschlussspannung (V_{cc}', V_{cc}") empfangen kann.

12. Schaltungsanordnung gemäß irgendeinem vorhergehenden Anspruch, **dadurch gekennzeichnet, dass** jede Verarbeitungseinheit (10, 12) weiters einen entsprechenden Rückstelleingang (RESET', RESET") aufweist.

13. Schaltungsanordnung gemäß den Ansprüchen 11 und 12, **dadurch gekennzeichnet, dass** jede Verarbeitungseinheit (10, 12) weiters ein Paar von Steuereingängen (50', 50") aufweist, welche die Anschlussspannung (V_{cc}' , V_{cc}") anzeigende Signale und das Rückstellsignal der anderen Einheit empfangen können.

14. Schaltungsanordnung gemäß Anspruch 11, **dadurch gekennzeichnet, dass** die Anschlussspannung (V_{cc}") der Hilfsverarbeitungseinheit (12) als Summe einer Zwischenspannung (Vᵢ), die durch der Hilfsverarbeitungseinheit (12) zugeordnete Spannungsreglermittel (42") erzeugt wird, und der Anschlussspannung (V_{cc}') der Hauptverarbeitungseinheit (10) erhalten wird.

15. Schaltungsanordnung gemäß Anspruch 14, **dadurch gekennzeichnet, dass** jeder Prozessoreinheit (10, 12) ein Überwachungstimer (60', 60") zugeordnet ist, der mit der Anschlussspannung dieser Einheit versorgt wird und dazu betriebsfähig ist, sein Rückstellsignal (R_{wd}' und R_{wd}") zu erzeugen.

16. Schaltungsanordnung gemäß den Ansprüchen 12 und 15, **dadurch gekennzeichnet, dass** jede Verarbeitungseinheit (10, 12) ein Rückstellsignal empfangen kann, das von der logischen Summe der Rückstellsignale, die von den jeweiligen Spannungsreglermitteln (42', 42") und dem jeweiligen Überwachungstimer (60', 60") ausgesendet werden, abgeleitet ist.

17. Schaltungsanordnung gemäß irgendeinem vorhergehenden Anspruch, **dadurch gekennzeichnet, dass** die Hilfsverarbeitungseinheit (12) dazu eingerichtet ist, die Funktionen der Hauptverarbeitungseinheit (10) nur teilweise zu übernehmen, wobei sie nur den Austausch von Nachrichten hoher Priorität verwaltet.

## Revendications

1. Agencement de circuit pour un module de commande électronique pouvant agir pour réaliser une conversion entre des protocoles de communication d'une pluralité de réseaux (14a à 14d) qui peuvent être connectés à celui-ci, comprenant :
- une unité centrale principale (10) et une unité centrale auxiliaire (12) pouvant agir pour réaliser une conversion entre des protocoles de communication et échanger des signaux entre les réseaux (14a à 14d), comprenant chacune une pluralité de ports d'entrée/sortie (16a à 16d ; 18a à 18d) prévus pour être couplés à ladite pluralité de réseaux (14a à 14d) par l'intermédiaire de lignes de communication correspondantes (15a à 15d) pour la transmission de signaux numériques, et
- une pluralité respective de dispositifs de sélection (22a' à 22d', 24a' à 24d' ; 22a" à 22d", 24a" à 24d") couplés aux ports d'entrée/sortie (16a à 16d ; 18a à 18d) de chaque unité centrale (10, 12) et interposés entre lesdits ports (16a à 16d ; 18a à 18d) et les lignes de communication respectives (15a à 15d) vers les réseaux correspondants (14a à 14d), lesdits dispositifs (22a' à 22d', 24a' à 24d' ; 22a" à 22d", 24a" à 24d") étant capables de permettre sélectivement la transmission de signaux sur lesdites lignes avec une unité centrale,
dans lequel lesdites unités centrales (10, 12) sont connectées ensemble au moyen d'une ligne de commande de communication (SPI) capable de transmettre à l'unité centrale auxiliaire (12) des signaux d'état indicatifs de l'état de fonctionnement de l'unité centrale principale (10),
et **caractérisé en ce que**
chaque dispositif de sélection (22a' à 22d', 24a' à 24d' ; 22a" à 22d", 24a" à 24d") comporte une entrée de validation commandée par l'unité centrale auxiliaire (12) en fonction desdits signaux d'état de l'unité principale (10) de telle manière que, dans un état de fonctionnement normal, lesdits dispositifs coopèrent pour établir un couplage entre l'unité principale (10) et lesdits réseaux (14a à 14d), l'unité auxiliaire (12) étant découplée et dans un état de panne de ladite unité principale (10), lesdits dispositifs coopèrent pour établir un couplage entre l'unité auxiliaire (12) et lesdits réseaux (14a à 14d), l'unité principale (10) étant découplée, de sorte que l'unité auxiliaire (12) prend en charge la gestion de la conversion entre les protocoles de communication et l'échange d'informations entre les réseaux.

2. Agencement de circuit selon la revendication 1, **caractérisé en ce que** les dispositifs de sélection (22a' à 22d', 24a' à 24d' ; 22a" à 22d", 24a" à 24d") comportent des entrées de validation couplées à un circuit de sélection (30) commandé par l'unité centrale auxiliaire (12).

3. Agencement de circuit selon la revendication 2, **caractérisé en ce que** lesdites lignes de communication (15a à 15d) sont des lignes de communication série bidirectionnelles et **en ce que** ladite pluralité de dispositifs de sélection comprennent une pluralité de paires de dispositifs (22a', 24a' ; 22b', 24b' ; 22c', 24c' ; 22d', 24d' ; 22a", 24a" ; 22b", 24b" ; 22c", 24c" ; 22d", 24d") couplées à chaque port d'entrée/sortie (16a à 16d, 18a à 18d) de chaque unité centrale (10, 12) respectivement pour l'émission et la réception de signaux.

4. Agencement de circuit selon la revendication 2 ou la revendication 3, **caractérisé en ce que** les entrées de validation des dispositifs de sélection (22a' à 22d', 24a' à 24d') couplés à l'unité centrale principale (10) sont connectées à une première ligne de sélection (EN') et les entrées de validation des dispositifs de sélection (22a" à 22d", 24a" à 24d") couplés à l'unité centrale auxiliaire (12) sont connectées à une seconde ligne de sélection (EN").

5. Agencement de circuit selon l'une quelconque des revendications 2 à 4, **caractérisé en ce que** le circuit de sélection (30) comprend un registre de mémoire (32) pouvant être mis en oeuvre pour mémoriser un mot de code, qui est couplé à une première entrée d'un circuit de comparateur (34), la seconde entrée dudit circuit de comparateur (34) étant couplée à une sortie de commande de sélection (36) de l'unité centrale auxiliaire (12).

6. Agencement de circuit selon la revendication 5, **caractérisé en ce que** le circuit de comparateur (34) comporte une sortie logique connectée directement à la seconde ligne de sélection (EN") et connectée en étant inversée à la première ligne de sélection (EN').

7. Agencement de circuit selon la revendication 5 ou la revendication 6, **caractérisé en ce que** l'unité centrale auxiliaire (12) est agencée pour émettre vers sa sortie de commande de sélection (36) un mot de code d'intervention correspondant au mot mémorisé dans le registre de mémoire (32) lorsqu'elle détecte un état de panne de l'unité principale (10) par l'intermédiaire de la ligne de commande de communication (SPI).

8. Agencement de circuit selon l'une quelconque des revendications précédentes, **caractérisé en ce que** lesdits dispositifs de sélection (22a' à 22d', 24a' à 24d' ; 22a" à 22d", 24a" à 24d") sont des dispositifs logiques à trois états.

9. Agencement de circuit selon l'une quelconque des revendications précédentes, **caractérisé en ce que** les unités centrales (10, 12) sont connectées ensemble au moyen d'une ligne de commande de communication série bidirectionnelle à haute vitesse (SPI).

10. Agencement de circuit selon l'une quelconque des revendications 1 à 8, **caractérisé en ce que** les unités centrales (10, 12) sont connectées ensemble au moyen d'une ligne de commande de communication parallèle bidirectionnelle à haute vitesse.

11. Agencement de circuit selon l'une quelconque des revendications précédentes, **caractérisé en ce que** chaque unité centrale (10, 12) comporte en outre une entrée d'alimentation (40', 40") capable de recevoir une tension d'alimentation (V_{cc}', V_{cc}") d'un moyen de régulation de tension respectif (42', 42").

12. Agencement de circuit selon l'une quelconque des revendications précédentes, **caractérisé en ce que** chaque unité centrale (10, 12) comprend en outre une entrée de réinitialisation respective (RESET', RESET").

13. Agencement de circuit selon les revendications 11 et 12, **caractérisé en ce que** chaque unité centrale (10, 12) comprend en outre une paire d'entrées de commande (50', 50") capables de recevoir des signaux indicatifs de la tension d'alimentation (V_{cc}', V_{cc}") et du signal de réinitialisation de l'autre unité.

14. Agencement de circuit selon la revendication 11, **caractérisé en ce que** la tension d'alimentation (V_{cc}") de l'unité centrale auxiliaire (12) est obtenue en tant que somme d'une tension intermédiaire (Vᵢ) générée par le moyen de régulation de tension (42") associé à l'unité centrale auxiliaire (12) et de la tension d'alimentation (V_{cc}') de l'unité centrale principale (10).

15. Agencement de circuit selon la revendication 14, **caractérisé en ce que** chaque unité de processeur (10, 12) comporte un temporisateur de surveillance (60', 60") associé à celle-ci, alimenté avec la tension d'alimentation de ladite unité et pouvant agir pour générer son signal de réinitialisation (R_{wd}' et R_{wd}").

16. Agencement de circuit selon les revendications 12 et 15, **caractérisé en ce que** chaque unité centrale (10, 12) est capable de recevoir un signal de réinitialisation obtenu à partir de la somme logique des signaux de réinitialisation émis par le moyen de régulation de tension respectif (42', 42") et le temporisateur de surveillance respectif (60', 60").

17. Agencement de circuit selon l'une quelconque des revendications précédentes, **caractérisé en ce que** l'unité centrale auxiliaire (12) est agencée pour prendre en charge seulement partiellement les fonctions de l'unité centrale principale (10), grâce à quoi elle ne gère que l'échange de messages à priorité élevée.
